# EUROPÄISCHE PATENTSCHRIFT

(11) **EP 3 096 984 B1**
(45) Veröffentlichungstag und Bekanntmachung des Hinweises auf die Patenterteilung: **14.03.2018**
(21) Anmeldenummer: 15700592.7
(22) Anmeldetag: 19.01.2015
(51) Int. Cl.: B60R 22/195

(54) **GURTSTRAFFEREINHEIT FÜR EINE FAHRZEUG-SICHERHEITSGURTANORDNUNG**
BELT TIGHTENER UNIT FOR A VEHICLE SAFETY BELT ARRANGEMENT
UNITÉ DE PRÉTENSION DE CEINTURE DE SÉCURITÉ POUR ENSEMBLE CEINTURE DE SÉCURITÉ DE VÉHICULE

(30) Priorität: 23.01.2014 DE 102014201231
(43) Veröffentlichungstag der Anmeldung: 30.11.2016
(73) Patentinhaber: Volkswagen AG, 38440 Wolfsburg (DE)
(72) Erfinder: MEYNER, Tom, 38550 Isenbütel (DE)
(86) Internationale Anmeldenummer: PCT/EP2015/050878
(87) Internationale Veröffentlichungsnummer: WO 2015/110383

(56) Entgegenhaltungen:
- EP-A1- 0 802 096
- EP-A1- 0 886 591
- DE-A1- 2 336 531

## Beschreibung

Die Erfindung betrifft eine Gurtstraffereinheit für eine Sicherheitsgurtanordnung eines Fahrzeugs nach dem Oberbegriff des Patentanspruches 1 sowie eine Sicherheitsgurtanordnung in einem Fahrzeug nach dem Patentanspruch 6.

Speziell an Vordersitzen eines Kraftfahrzeuges kann ein Dreipunkt-Sicherheitsgurt nicht nur am Schultergurtanteil einen Gurtstraffer aufweisen, sondern zusätzlich auch an einem, in der Fahrzeugquerrichtung äußeren Anlenkpunkt des Beckengurtanteils. Bei einer solchen Doppelstraffung ist der herkömmliche ortsfeste Endbeschlag des Beckengurtabschnittes durch einen pyrotechnisch aktivierbaren Endbeschlagstraffer ersetzt, der im Crashfall eine Gurtlose aus dem Beckengurtanteil zieht und somit eine Beckenvorverlagerung reduziert.

Aus der DE 43 31 027 A1 ist eine Gurtstraffereinheit für einen Beckengurtanteil des Sicherheitsgurts bekannt, bei der ein Gurtbandende auf eine Wickelwelle aufwickelbar ist. Die Wickelwelle ist in Axialrichtung mit einer Seilscheibe verlängert, über die ein Zugseil mit einem pyrotechnisch betreibbaren Gurtstraffer verbunden ist. Im Crashfall wird der Gurtstraffer pyrotechnisch aktiviert, wodurch über das Zugseil schlagartig eine Drehbetätigung der Wickelwelle in der Aufwickelrichtung erfolgt. Die Tragstruktur der Gurtstraffereinheit ist durch einen im Profil U-förmigen Tragrahmen gebildet. Der Tragrahmen weist zwei gegenüberliegende Lagerwände auf, zwischen denen eine Wickelwelle drehbar gelagert ist. Die offene Seite des U-förmigen Tragrahmens bildet einen Gurtbandeinzug, durch den das Gurtbandende des Sicherheitsgurtes bis zur Wickelwelle geführt ist und dort aufgewickelt ist.

In der DE 43 31 027 A1 ist der Gurtstraffer eine Kolben-Zylinder-Einheit, die bei Aktivierung die Zugkraft auf den Beckengurtanteil ausübt. Die Kolben-Zylinder-Einheit weist zur Bereitstellung eines erforderlichen Hubweges ein langgestrecktes Gurtstrafferrohr auf, in dem der mit dem Zugseil verbundene Kolben im Crashfall hubverstellbar ist. Das hierzu erforderliche langgestreckte Gurtstrafferrohr führt zu einer insgesamt sehr bauraumintensiven Ausführung der Gurtstraffereinheit.

Zudem muß die Rohbau-Anbindung der Gurtstraffereinheit im Fahrzeugschweller derart bauteilsteif ausgelegt sein, dass eine unfallbedingte Krafteinleitung ohne weiteres, das heißt deformationsfrei, aufgenommen werden kann. Eine derartige Bauteilverbindung ist jedoch nachteilig mit einem entsprechend großen Bauraumbedarf verbunden.

Aus der EP 0 886 591 B1 ist eine gattungsgemäße Gurtstraffereinheit bekannt, die einen am Fahrzeugsitz montierbaren Tragrahmen aufweist, zwischen dessen beiden Lagerwänden eine Wickelwelle drehbar gelagert ist, auf der ein Sicherheitsgurt aufwickelbar ist. Die Gurtstraffereinheit weist einen als freien Durchlass ausgeführten Gurtbandeinzug auf, der von einem Führungszapfen begrenzt ist, über den der Sicherheitsgurt auf die Wickelwelle führbar ist.

Die Aufgabe der Erfindung besteht darin, eine Gurtstraffereinheit für eine Sicherheitsgurtanordnung eines Fahrzeugs bereitzustellen, bei der die Gurtstraffereinheit trotz reduziertem Bauraumbedarf über eine einwandfreie Funktionsweise verfügt.

Die Aufgabe ist durch die Merkmale des Patentanspruches 1 oder des Patentanspruches 6 gelöst. Bevorzugte Weiterbildungen der Erfindung sind in den Unteransprüchen offenbart.

Die Erfindung beruht auf der Problematik, dass die Bauteile der Gurtstraffereinheit, insbesondere die Wickelwelle zum Aufwickeln des Gurtbandendes sowie der pyrotechnisch betriebene Gurtstraffer, der über ein Zugseil einen Drehmoment auf die Wickelwelle aufbringen kann, bauraumintensiv sind. Daher muss im Fahrzeug-Schwellerbereich ein entsprechend großer Bauraum bereitgestellt sein, was zu Packageproblemen führen kann. Vor diesem Hintergrund weist die erfindungsgemäße Gurtstraffereinheit gemäß dem kennzeichnenden Teil des Patentanspruches 1 einen Montageabschnitt auf, mit dem der Gurtstraffer an der Seite des Gurtbandeinzuges positioniert werden kann. Der Gurtbandeinzug der Gurtstraffereinheit ist ein freier Durchlass, durch den das Gurtbandende bis zur Wickelwelle geführt wird.

Erfindungsgemäß ist dieser freie Durchlass von dem Gurtstraffer und/oder von dem Montageabschnitt des Gurtstraffers begrenzt. Zudem ist der Durchlass zusätzlich von einem Führungssteg der Gurtstraffereinheit begrenzt. Dadurch wird beim Zusammenbau des Gurtbandendes mit der Gurtstraffereinheit ein Einfädelvorgang des Gurtbandendes in die Wickelwelle vereinfacht. Zudem wird mittels des erfindungsgemäß gebildeten Gurtbandeinzugs bei einer crashbedingten Aktivierung der verbauten Gurtstraffereinheit ein ungehindertes Aufwickeln des Gurtbandendes auf der Wickelwelle gewährleistet.

Im Hinblick auf eine verformungsfreie Krafteinleitung vom Sicherheitsgurt in den Fahrzeugrohbau weist die Gurtstraffereinheit einen entsprechend bauteilsteifen Tragrahmen auf. Der Tragrahmen ist durch zwei einander gegenüberliegende Lagerwände aufgebaut, zwischen denen die Wickelwelle drehbar gelagert ist. Im Hinblick auf eine hohe Bauteilsteifigkeit ist der Führungssteg und der Montageabschnitt des Gurtstraffers an den beiden Lagerwänden angebunden, und zwar bevorzugt materialeinheitlich und/oder einstückig. Der Tragrahmen kann bevorzugt ein umgeformtes Blechteil mit ausreichend großer Materialstärke sein.

Wie bereits oben erwähnt, kann die Gurtstraffereinheit im Bereich des Fahrzeugschwellers am Fahrzeugrohbau angebunden werden. Die hierzu erforderliche Anbindungsstelle der Gurtstraffereinheit kann eine Montageplatte sein, an der die Gurtstraffereinheit mit dem Fahrzeugrohbau verschraubbar ist. Für eine besonders bauraumreduzierte Anordnung ist die Anbindungsstelle mit Bezug auf die Wickelwelle der Gurtstraffereinheit diametral gegenüberliegend zum Gurtstraffer angeordnet. Zur weiteren Steigerung der Steifigkeit des Tragrahmens kann die Montageplatte (das heißt die Anbindungsstelle der Gurtstraffereinheit), umfangsseitig versetzt zum Führungssteg und/oder zum Montageabschnitt des Gurtstraffers, an den beiden Lagerwänden der Gurtstraffereinheit angebunden sein.

Der Gurtstraffer kann bevorzugt eine pyrotechnisch betätigbare Kolben-Zylinder-Einheit aufweisen, bei der der Zylinder ein langgestrecktes Strafferrohr mit darin angeordnetem hubverstellbaren Kolben ist. Am Kolben ist das Zugseil befestigt, mit dem im Crashfall ein Drehmoment in Aufwickelrichtung auf die Wickelwelle ausgeübt wird. Auf diese Weise erfolgt bei pyrotechnischer Aktivierung des Gurtstraffers die Hubverstellung des Kolbens im Strafferrohr, und zwar unter Reduzierung der Gurtlose im Sicherheitsgurt. Die Anordnung des Gurtstrafferrohrs ist im Hinblick auf den erforderlichen Bauraum von besonderer Relevanz, und zwar aufgrund der Länge des Gurtstrafferrohr, das den zur Gurtstraffung erforderlichen Hubweg des Kolbens bereitstellen muss. Im Hinblick auf eine Bauraumreduzierung ist es besonders von Vorteil, wenn das Gurtstrafferrohr zumindest teilweise rechtwinklig zur Wickelwellen-Achse sowie parallel zum Gurtbandende sich erstreckt. Zudem ist es bevorzugt, wenn das Gurtstrafferrohr diametral gegenüberliegend zur Anbindungsstelle der Wickelwelle weg erstreckt.

Um unterschiedlichen Einbauverhältnissen im Fahrzeug Rechnung zu tragen, ist es bevorzugt, wenn der Gurtstraffereinheit zusätzlich ein Umlenkbeschlag zugeordnet ist, mit dem das Gurtbandende in eine günstige Richtung umlenkbar ist. Bevorzugt kann das Gurtbandende am Umlenkbeschlag in den Beckenabschnitt des Sicherheitsgurtes übergehen.

Für eine besonders bauraumgünstige Anordnung kann die Wickelwelle und das Strafferrohr unter Bildung eines zum Beispiel in etwa rechtwinkligen Inneneckbereiches einen Bauraum aufspannen, in dem der oben erwähnte Umlenkbeschlag angeordnet ist.

Die Gurtstraffereinheit kann Bestandteil einer Sicherheitsgurtanordnung in einem Fahrzeug sein. Bevorzugt kann die Sicherheitsgurtanordnung einen Dreipunkt-Sicherheitsgurt aufweisen, und zwar mit einem sich diagonal über den Insassenkörper erstreckenden Schultergurtanteil und einen Beckengurtanteil. Der Beckengurtanteil kann an seinem, in der Fahrzeugquerrichtung inneren Anlenkpunkt an einem Gurtschluß angebunden sein. An seinem, in der Fahrzeugquerrichtung äußeren Anlenkpunkt kann der Beckenanteil keinen fahrzeugfesten Endbeschlag aufweisen, sondern vielmehr die erfindungsgemäße Gurtstraffereinheit (Endbeschlagstraffereinheit), mit deren Hilfe im Crashfall eine Gurtlose aus dem Beckengurtanteil gezogen wird und eine Beckenvorverlagerung reduziert wird.

Die Gurtstraffereinheit kann in diesem Fall in der Fahrzeugquerrichtung betrachtet an einer Innenwand des Fahrzeug-Schwellers montiert sein, und zwar in der Fahrzeuglängsrichtung in etwa auf der Höhe der B-Säule. Die Einbaulage des erfindungsgemäßen Gurtstraffers ist dabei im Hinblick auf eine reduzierte Baulänge in der Fahrzeuglängsrichtung so gewählt, dass deren Wickelwelle vertikal, das heißt in der Fahrzeughochrichtung, verbaut ist. Die Anbindungsstelle sowie der Gurtstraffer sind dabei, in der Fahrzeuglängsrichtung betrachtet, hinter und vor der vertikal ausgerichteten Wickelwelle angeordnet. Auf diese Weise kann die Gurtstraffereinheit bauraumgünstig zwischen der Sitzaufnahme für den Vordersitz des Fahrzeugs und dem Fersenblech des Radstandes für das Hinterrad angeordnet werden.

Die vorstehend erläuterten und/oder in den Unteransprüchen wiedergegebenen, vorteilhaften Aus- und/oder Weiterbildungen der Erfindung können - außer zum Beispiel in den Fällen eindeutiger Abhängigkeiten oder unvereinbarer Alternativen - einzeln oder aber in beliebiger Kombination miteinander zur Anwendung kommen.

Die Erfindung und ihre vorteilhaften Aus- und/oder Weiterbildungen sowie deren Vorteile werden nachfolgend anhand von Zeichnungen näher erläutert.

Es zeigen:
- Fig. 1: in einer vergrößerten Seitenansicht mit einer Blickrichtung vom Fahrzeuginnenraum die erfindungsgemäße Gurtstraffereinheit in ihrer Einbaulage;
- Fig. 2: in einer vergrößerten Darstellung die Gurtstraffereinheit in Alleinstellung; und
- Fig. 3: die Gurtstraffereinheit in einer Schnittdarstellung entlang der Schnittebene I-I aus der Fig. 1.

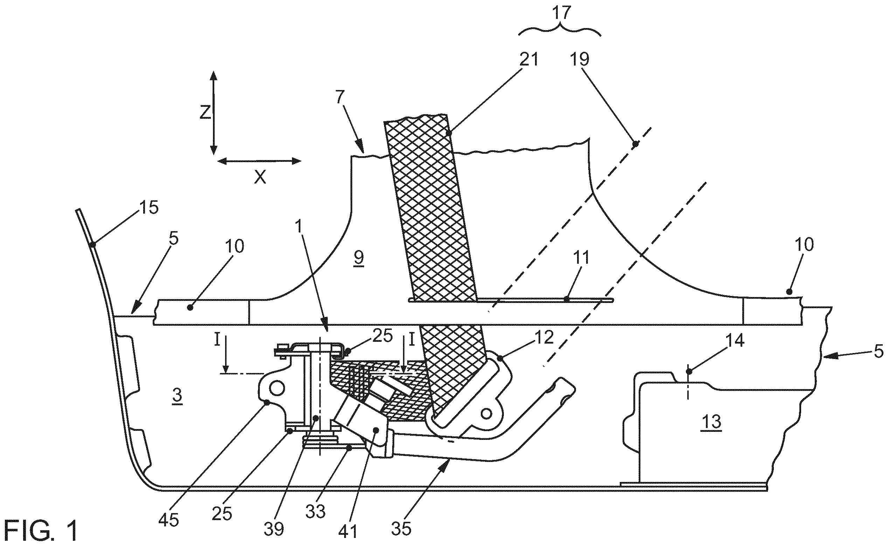

In der Fig. 1 ist die Gurtstraffereinheit 1 an ihrem Verbauort gezeigt, nämlich an einem Innenblechteil 3 eines Türschwellers 5, der Bestandteil des Fahrzeugrohrbaus ist. Der Türschweller 5 geht in der Fig. 1 in der Fahrzeughochrichtung z an einem Säulenfuß in die B-Säule 7 über, die in der Fig. 1 von einer Säulenverkleidung 9 überdeckt ist. An die Säulenverkleidung 9 schließt in der Fahrzeuglängsrichtung x nach vorne und nach hinten jeweils eine angedeutete Einstiegsleiste 10 an, die auf der Oberseite des Türschwellers 5 positioniert ist. In der Säulenverkleidung 9 ist ein Führungsschlitz 11 angedeutet, durch den ein Dreipunkt-Sicherheitsgurt 17 bis zur Gurtstraffereinheit 1 geführt ist. Die Gurtstraffereinheit 1 ist im Zusammenbauzustand sichtgeschützt hinter eine Bodenverkleidung angeordnet, die in der Fig. 1 aus Gründen der Übersichtlichkeit weggelassen ist.

Wie aus der Fig. 1 weiter hervorgeht, ist die Gurtstraffereinheit 1 in der Fahrzeuglängsrichtung x zwischen dem Radhaus 15 für das Fahrzeughinterrad und der Sitzaufnahme 13 mit angedeutetem Anbindungspunkt 14 für den nicht gezeigten Vordersitz des Fahrzeuginsassen angeordnet.

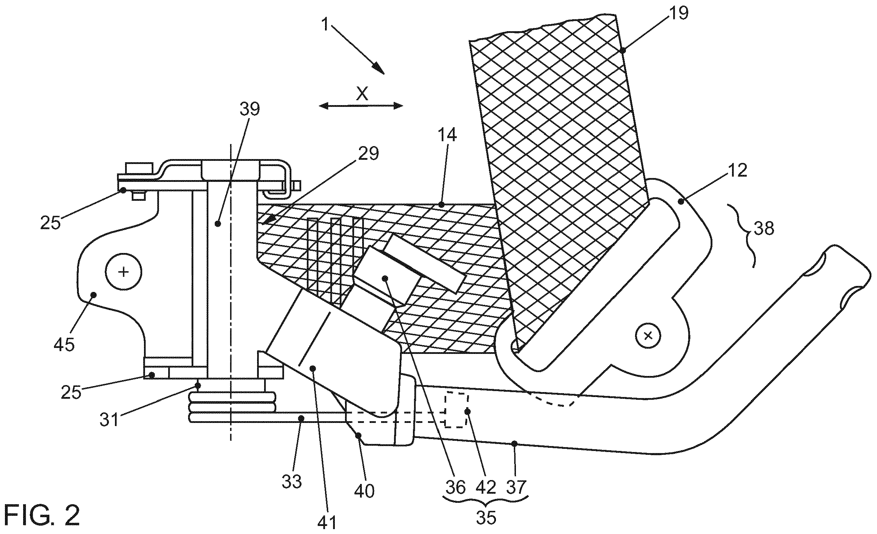

Der Dreipunkt-Sicherheitsgurt 17 ist in bekannter Weise aus einem Beckengurtanteil 19 und einem Schultergurtanteil 21 zusammengesetzt. Der Schultergurtanteil 21 ist in nicht dargestellter Weise in etwa auf Kopfhöhe des am Vordersitz sitzenden Fahrzeuginsassen an der B-Säule 7 über zum Beispiel einem ersten Gurtstraffer angelenkt. Der Beckengurtanteil 19 verläuft im angegurteten Zustand (in der Fig. 1 und 2 mit gestrichelten Linien angedeutet) vom fahrzeugmittig angeordneten Gurtschloss in der Fahrzeugquerrichtung y über den Beckenbereich des Fahrzeuginsassen bis zum äußeren Anlenkpunkt am Schweller 4, der erfindungsgemäß durch die Gurtstraffereinheit 1 realisiert ist.

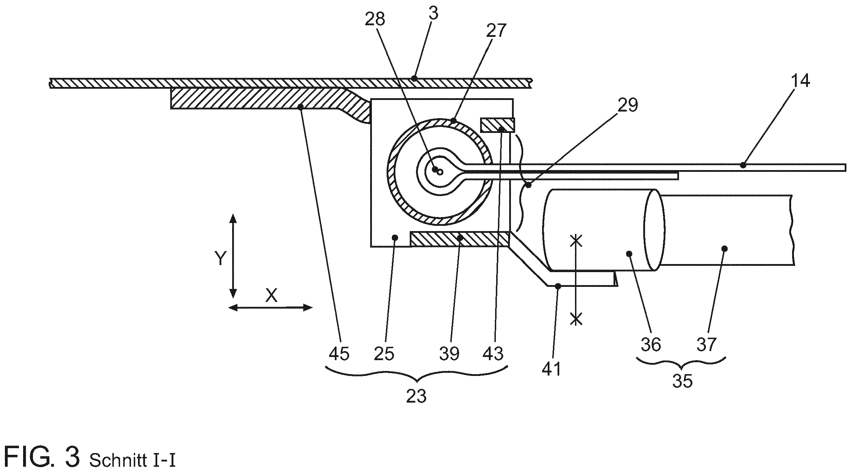

In der Fig. 1 ist der Beckengurtanteil 19 durch den Führungsschlitz 11 in der Säulenverkleidung 9 bis zu einem Umlenkbeschlag 12 geführt, an dem der Beckengurtanteil 19 in ein in etwa in der Fahrzeuglängsrichtung x horizontal verlaufendes Gurtbandende 14 übergeht. Das Gurtbandende 14 ist an einem Gurtbandeinzug 29 (Fig. 2 und 3) der Gurtstraffereinheit 1 zur einer Wickelwelle 27 geführt. Die Wickelwelle 27 ist gemäß der Fig. 3 eine Hohlwelle, in der ein Einhängestift 28 angeordnet ist, der von einer Schlaufe des Gurtbandendes 14 umfasst ist.

Die Wickelwelle 27 ist in ihrer Axialrichtung mit einer Seilscheibe 31 verlängert, auf die ein Zugseil 33 gewickelt ist. Das Zugseil 33 ist wiederum mit einem pyrotechnisch betätigbaren Gurtstraffer 35 gekoppelt. Der Gurtstraffer 35 ist hier beispielhaft eine Zylinder-Kolben-Einheit mit einem langgestreckten Strafferrohr 37, in dem ein hubverstellbarer Kolben 42 angeordnet ist. Im Crashfall wird der Zündgenerator 36 der Gurtstraffereinheit 1 gezündet und dadurch der Kolben 42 schlagartig über einen Hubweg verstellt, wodurch über das Zugseil 33 eine Drehbetätigung der Wickelwelle 27 in der Aufwickelrichtung erfolgt.

Nachfolgend ist die Tragstruktur der Gurtstraffereinheit 1 beschrieben, die unter anderem einen Gurtstraffer 35 und eine Wickelwelle 27 trägt: So weist die Gurtstraffereinheit 1 als tragendes Element einen Tragrahmen 23 auf. Dieser ist durch zwei einander gegenüberliegende Lagerwände 25 aufgebaut, zwischen denen die Wickelwelle 27 drehbar gelagert ist.

Wie aus den Figuren hervorgeht, weist der Tragrahmen 23 einen Montageabschnitt 39 auf, der an den beiden gegenüberliegenden Lagerwänden 25 angebunden ist. Am Montageabschnitt 39 ist ein schräg abgestellter Tragschenkel 41 angeformt, an dem ein Befestigungsabschnitt 40 des Strafferrohrs 37 montiert ist. Der Montageabschnitt 39 ist dabei derart ausgelegt, dass der Gurtstraffer 35 an der Seite des Gurtbandeinzuges 29 positioniert ist. Dieser ist als ein freier Durchlass zwischen dem Montageabschnitt 39 und einem Führungssteg 43 definiert. Der Führungssteg 43 ist, wie auch der Montageabschnitt 39, an den beiden gegenüberliegenden Lagerwänden 25 des Tragrahmens 23 angebunden.

Zusätzlich weist der Tragrahmen 23 als Anbindungsstelle 45 zur Anbindung am Fahrzeugrohrbau eine Montageplatte auf, über die die Gurtstraffereinheit 35 mit dem Innenblechteil 3 des Fahrzeug-Schwellers 5 verschraubbar ist. In den dargestellten Figuren ist die Montageplatte 45 mit Bezug auf die Wickelwelle 27 diametral gegenüberliegend zum Gurtstraffer 35 angeordnet. Die Montageplatte 45 ist ebenfalls an den beiden Lagerwänden 25 angebunden, woraus sich insgesamt eine besonders bauteilsteife Tragstruktur ergibt, mit der eine unfallbedingte deformationsfreie Krafteinleitung den Fahrzeugrohbau erfolgen kann.

Wie aus der Fig. 1 oder 2 weiter hervorgeht, sind das Strafferrohr 37 und die Wickelwelle 27 zueinander in etwa rechtwinklig angeordnet, und zwar unter Bildung eines Inneneckbereiches 38 (siehe Fig. 2) zwischen dem Strafferrohr 35 und der Wickelwelle 27, in dem der Umlenkbeschlag 12 bauraumgünstig angeordnet ist.

Die Wickelwelle 27 ist in der Einbaulage dabei vertikal angeordnet, wobei die Montageplatte 45 und der Gurtstraffer 35 in der Fahrzeuglängsrichtung x betrachtet mit Bezug auf die Wickelwellen-Achse diametral gegenüberliegend angeordnet sind.

## Patentansprüche

1. Gurtstraffereinheit für eine Sicherheitsgurtanordnung eines Fahrzeugs, mit einem Gurtbandeinzug (29), der ein freier Durchlass ist, durch den ein Gurtbandende (14) bis zu einer Wickelwelle (27) geführt ist und darauf aufwickelbar ist, die über ein Zugseil (33) mit einem Gurtstraffer (35) verbunden ist, mit dem im Crashfall zur Gurtstraffung über das Zugseil (33) eine Drehbetätigung der Wickelwelle (27) in der Aufwickelrichtung durchführbar ist, wobei die Gurtstraffereinheit (1) einen Tragrahmen (23) mit zwei Lagerwänden (25) aufweist, zwischen denen die Wickelwelle (27) drehbar gelagert ist und ein Führungssteg (43) an den beiden Lagerwänden (25) angebunden ist, und wobei die Gurtstraffereinheit (1) eine Anbindungsstelle (45) zur Anbindung der Gurtstraffereinheit (1) am Fahrzeugrohbau aufweist, **dadurch gekennzeichnet, dass** die Gurtstraffereinheit (1) einen Montageabschnitt (39) aufweist, an dem der Gurtstraffer (35) befestigt ist, dass der Montageabschnitt (39) an beiden Lagerwänden (25) angebunden ist, und dass mittels des Montageabschnitts (39) der Gurtstraffer (35) derart an der Seite des Gurtbandeinzugs (29) positioniert ist, dass der Gurtbandeinzug (29) zwischen dem Montageabschnitt (39) und dem Führungssteg (43) definiert ist sowie die Anbindungsstelle (45) mit Bezug auf die Wickelwelle (27) diametral gegenüberliegend zum Gurtstraffer (35) angeordnet ist.

2. Gurtstraffereinheit nach Anspruch 1, **dadurch gekennzeichnet, dass** die Anbindungsstelle (45) zur Anbindung der Gurtstraffereinheit (1) am Fahrzeugrohbau eine Montageplatte ist, und dass die Montageplatte (45), umfangsseitig versetzt zum Führungssteg (43) und/oder zum Montageabschnitt (39), an beiden Lagerwänden (25) der Gurtstraffereinheit (1) angebunden ist.

3. Gurtstraffereinheit nach einem der vorhergehenden Ansprüche, **dadurch gekennzeichnet, dass** der Gurtstraffer (35) ein Strafferrohr (37) mit einem darin hubverstellbar angeordneten Kolben (42) aufweist, an dem das Zugseil (33) befestigt ist, und dass der Kolben (42) im Crashfall insbesondere pyrotechnisch aktivierbar ist und unter Gurtstraffung im Strafferrohr (37) hubverstellbar ist, und dass das Strafferrohr (37) zumindest teilweise rechtwinklig zur Wickelwellen-Achse, parallel zum Gurtbandende (14) liegt und/oder sich diametral gegenüberliegend zur Anbindungsstelle (45) von der Wickelwelle (27) weg erstreckt.

4. Gurtstraffereinheit nach einem der vorhergehenden Ansprüche, **dadurch gekennzeichnet, dass** der Gurtstraffereinheit (1) ein Umlenkbeschlag (12) zugeordnet ist, mit dem das Gurtbandende (14) umlenkbar ist, und insbesondere das Gurtbandende (14) in einen Beckengurtanteil (19) des Sicherheitsgurts (17) übergeht.

5. Gurtstraffereinheit nach Anspruch 4, **dadurch gekennzeichnet, dass** die Wickelwelle (27) und das Strafferrohr (35) unter Bildung eines Inneneckbereichs (38) einen Bauraum aufspannen, in dem der Umlenkbeschlag (12) angeordnet ist.

6. Sicherheitsgurtanordnung in einem Fahrzeug, mit einem Sicherheitsgurt (17) mit einem Schultergurtanteil (21) und einem Beckengurtanteil (19), der an seinem, in der Fahrzeugquerichtung (y) äußeren Anlenkpunkt im Bereich eines Schwellers (5) an einer Gurtstraffereinheit (1) nach einem der vorhergehenden Ansprüche gehalten ist.

7. Sicherheitsgurtanordnung nach Anspruch 6, **dadurch gekennzeichnet, dass** die Wickelwelle (27) der Gurtstraffereinheit (1) vertikal im Fahrzeug verbaut ist, und dass der Gurtstraffer (35) und die Anbindungsstelle (45) in der Fahrzeuglängsrichtung (x) betrachtet vor und hinter der Wickelwelle (27) angeordnet sind.

## Claims

1. Belt tightener unit for a vehicle safety belt, with a belt strap inlet (29) which is a free passage, through which a belt strap end (14) is guided as far as a winding shaft (27) and can be wound up thereon, the winding shaft being connected via a traction cable (33) to a belt tightener (35) with which, in the event of a crash, a rotational actuation of the winding shaft (27) in the winding-up direction can be carried out via the traction cable (33) in order to tighten the belt, wherein the belt tightener unit (1) has a supporting frame (23) with two bearing walls (25), between which the winding shaft (27) is rotatably mounted, and a guide web (43) is connected to the two bearing walls (25), and wherein the belt tightener unit (1) has a connection point (45) for connecting the belt tightener unit (1) to the vehicle body shell, **characterized in that** the belt tightener unit (1) has a mounting section (39) to which the belt tightener (35) is fastened, **in that** the mounting section (39) is connected to the two bearing walls (25), and **in that** the belt tightener (35) is positioned on the side of the belt strap inlet (29) by means of the mounting section (39) in such a manner that the belt strap inlet (29) is defined between the mounting section (39) and the guide web (43), and the connecting point (45) is arranged diametrically opposite the belt tightener (35) with respect to the winding shaft (27).

2. Belt tightener unit according to Claim 1, **characterized in that** the connecting point (45) for connecting the belt tightener unit (1) to the vehicle body shell is a mounting plate, and **in that** the mounting plate (45) is connected to the two bearing walls (25) of the belt tightener unit (1) in a manner offset circumferentially with respect to the guide web (43) and/or with respect to the mounting section (39).

3. Belt tightener unit according to either of the preceding claims, **characterized in that** the belt tightener (35) has a tightener tube (37) with a piston (42) which is arranged therein so as to be adjustable in terms of its stroke and to which the traction cable (33) is fastened, and **in that**, in the event of a crash, the piston (42) is activatable, in particular pyrotechnically, and is adjustable in terms of its stroke in the tightener tube (37), thereby tightening the belt, and **in that** the tightener tube (37) lies at least partially at right angles to the winding shaft axis, parallel to the end of the belt strap (14), and/or extends away from the winding shaft (27) in a manner lying diametrically opposite the connecting point (45).

4. Belt tightener unit according to one of the preceding claims, **characterized in that** the belt tightener unit (1) is assigned a deflection fitting (12) at which the belt strap end (14) is deflectable, and in particular the belt strap end (14) merges into a lap belt portion (19) of the safety belt (17).

5. Belt tightener unit according to Claim 4, **characterized in that** the winding shaft (27) and the tightener tube (35) span a construction space, in which the deflecting fitting (12) is arranged, with an inner corner region (38) being formed.

6. Safety belt arrangement in a vehicle, with a safety belt (17) having a shoulder belt portion (21) and a lap belt portion (19) which, at its outer coupling point, in the transverse direction (y) of the vehicle, in the region of a sill (5) is held at a belt tightener unit (1) according to one of the preceding claims.

7. Safety belt arrangement according to Claim 6, **characterized in that** the winding shaft (27) of the belt tightener unit (1) is installed vertically in the vehicle, and **in that** the belt tightener (35) and the connecting point (45) are arranged in front of and behind the winding shaft (27), as viewed in the longitudinal direction (x) of the vehicle.

## Revendications

1. Unité de tendeur de ceinture pour un agencement de ceinture de sécurité d'un véhicule, comprenant une entrée de bande de ceinture (29) qui est un passage libre à travers lequel est guidée une extrémité de la ceinture de sécurité (14) jusqu'à un arbre d'enroulement (27) sur lequel elle peut être enroulée, l'arbre d'enroulement étant relié par le biais d'un câble de traction (33) à un tendeur de ceinture (35) avec lequel, en cas de collision, un actionnement en rotation de l'arbre d'enroulement (27) dans le sens de l'enroulement peut être effectué pour tendre la ceinture par le biais du câble de traction (33), l'unité de tendeur de ceinture (1) présentant un cadre de support (23) avec deux parois d'appui (25) entre lesquelles l'arbre d'enroulement (27) est supporté de manière à pouvoir tourner et une nervure de guidage (43) étant reliée aux deux parois d'appui (25), et l'unité de tendeur de ceinture (1) présentant un point de liaison (45) pour relier l'unité de tendeur de ceinture (1) à la carrosserie brute du véhicule, **caractérisée en ce que** l'unité de tendeur de ceinture (1) présente une portion de montage (39) sur laquelle est fixé le tendeur de ceinture (35), **en ce que** la portion de montage (39) est reliée aux deux parois d'appui (25) et **en ce que** le tendeur de ceinture (35), au moyen de la portion de montage (39), est positionné au niveau du côté de l'entrée de bande de ceinture (29) de telle sorte que l'entrée de bande de ceinture (29) soit définie entre la portion de montage (39) et la nervure de guidage (43) et que le point de liaison (45) soit disposé par rapport à l'arbre d'enroulement (27) de manière diamétralement opposée au tendeur de ceinture (35).

2. Unité de tendeur de ceinture selon la revendication 1, **caractérisée en ce que** le point de liaison (45) pour relier l'unité de tendeur de ceinture (1) à la carrosserie brute de véhicule est une plaque de montage et **en ce que** la plaque de montage (45), décalée du côté de la périphérie par rapport à la nervure de guidage (43) et/ou par rapport à la portion de montage (39), est reliée aux deux parois d'appui (25) de l'unité de tendeur de ceinture (1).

3. Unité de tendeur de ceinture selon l'une quelconque des revendications précédentes, **caractérisée en ce que** le tendeur de ceinture (35) présente un tube de tendeur (37) avec un piston (42) disposé avec une course réglable dans celui-ci, sur lequel est fixé le câble de traction (33), et **en ce que** le piston (42) peut être activé notamment de manière pyrotechnique en cas de collision et sa course peut être réglée par tension de la ceinture dans le tube de tendeur (37), et **en ce que** le tube de tendeur (37) est situé au moins en partie à angle droit par rapport à l'axe de l'arbre d'enroulement, parallèlement à l'extrémité de la bande de ceinture (14) et/ou s'étend de manière diamétralement opposée au point de liaison (45) à l'écart de l'arbre d'enroulement (27).

4. Unité de tendeur de ceinture selon l'une quelconque des revendications précédentes, **caractérisée en ce qu'**une ferrure de renvoi (12) est associée à l'unité de tendeur de ceinture (1), avec laquelle l'extrémité de la bande de ceinture (14) peut être renvoyée, et notamment l'extrémité de bande de ceinture (14) se prolonge par une partie de ceinture de bassin (19) de la ceinture de sécurité (17).

5. Unité de tendeur de ceinture selon la revendication 4, **caractérisée en ce que** l'arbre d'enroulement (27) et le tube de tendeur (35), en formant une région de coin intérieure (38), enserrent un espace de construction dans lequel est disposée la ferrure de renvoi (12).

6. Agencement de ceinture de sécurité dans un véhicule, comprenant une ceinture de sécurité (17) avec une partie de ceinture d'épaule (21) et une partie de ceinture de bassin (19), qui est fixée, au niveau de son point de liaison extérieur dans la direction transversale du véhicule (y) dans la région d'un seuil de porte (5), à une unité de tendeur de ceinture (1) selon l'une quelconque des revendications précédentes.

7. Agencement de ceinture de sécurité selon la revendication 6, **caractérisé en ce que** l'arbre d'enroulement (27) de l'unité de tendeur de ceinture (1) est construit verticalement dans le véhicule, et **en ce que** le tendeur de ceinture (35) et le point de liaison (45), vu la direction longitudinale du véhicule (x), sont disposés avant et derrière l'arbre d'enroulement (27).
